# EUROPEAN PATENT APPLICATION

(11) **EP 4 818 116 A1**
(43) Date of publication of application: **07.10.2026**
(21) Application number: 25222089.2
(22) Date of filing: 10.12.2025
(51) Int. Cl.: C01B 25/45, C01B 25/00, C01B 32/05

(54) **LITHIUM MANGANESE IRON PHOSPHATE MATERIAL, PREPARATION METHOD OF THE SAME, CATHODE MATERIAL, AND LITHIUM-ION BATTERY**

(30) Priority: 31.12.2024 CN 202412000207; 11.04.2025 WO PCT/CN2025/088619
(71) Applicant: Huizhou EVE Power Co., Ltd, Tonghu Town, Zhongkai High-tech District Huizhou, Guangdong 516000 (CN)
(72) Inventor: HU, Qi, Huizhou, Guangdong, 516000 (CN); XU, Xinxin, Huizhou, Guangdong, 516000 (CN); SONG, Qing, Huizhou, Guangdong, 516000 (CN); LIU, Ziwen, Huizhou, Guangdong, 516000 (CN); HE, Wei, Huizhou, Guangdong, 516000 (CN)
(74) Representative: Herrero & Asociados, S.L.

(57) **Abstract**

A lithium manganese iron phosphate material and a preparation method of the lithium manganese iron phosphate material, a cathode material, and a lithium-ion battery are provided. The lithium manganese iron phosphate material includes a lithium manganese iron phosphate core and a carbon coating layer covering a surface of the lithium manganese iron phosphate core. A chemical formula of the lithium manganese iron phosphate core is LiFeₓMn_{y}M_{1-x-y}PO₄. In detail, 0.80≤x<1, 0<y≤0.20, and x+y<1. M is at least one selected from the group consisting of V, Si, Ge, Sn, and Zn. A powder linear resistance of the lithium manganese iron phosphate material is 5 mΩ/mm-50 mΩ/mm. In blended applications, the lithium manganese iron phosphate material can better match a charge-discharge platform of a ternary material, achieving fast-charging requirements over a wider SOC range while maintaining low powder linear resistance, excellent energy density, capacity, fast-charging, and safety performance.

## Description

### TECHNICAL FIELD

The present disclosure relates to the technical field of lithium-ion battery materials, and particularly to a lithium manganese iron phosphate material, a preparation method of the lithium manganese iron phosphate material, a cathode material, and a lithium-ion battery.

### BACKGROUND

Lithiated phosphate materials have advantages such as low cost and safety. However, different types of lithiated phosphate materials have corresponding distinct defects. For example, lithium iron phosphate materials have low energy density, while lithium manganese iron phosphate materials exhibit low capacity, high impedance, and weak fast-charging performance. Additionally, the low energy density of phosphates makes it difficult to meet requirements of next-generation battery systems. Mixing lithiated phosphates with nickel-cobalt-manganese oxides with high-energy-density is one of future directions to meet high-energy-density demands. However, currently, lithium iron phosphate has a low voltage plateau, which is incompatible with lithiated metal oxides. Lithium manganese iron phosphate with high Mn content and high impedance also exhibits kinetic incompatibility with ternary materials, making it difficult to meet requirements for blended applications. Therefore, there is a need to develop a lithiated phosphate material suitable for blended applications while balancing high energy density and fast-charging performance.

### SUMMARY

**A** main objective of the present disclosure is to provide a lithium manganese iron phosphate material and a preparation method of the lithium manganese iron phosphate material, a cathode material, and a lithium-ion battery, aiming to solve the problems in the related art where lithiated phosphate materials exhibit inability to balance high energy density and fast-charging performance and fail to meet the requirements for blended applications.

To achieve the above objective, according to one aspect of the present disclosure, a lithium manganese iron phosphate material is provided. The lithium manganese iron phosphate material includes a lithium manganese iron phosphate core and a carbon coating layer covering a surface of the lithium manganese iron phosphate core. A chemical formula of the lithium manganese iron phosphate core is LiFeₓMn_{y}M_{1-x-y}PO₄, where 0.80≤x<1, 0<y≤0.20, and x+y<1. M is at least one selected from the group consisting of V, Si, Ge, Sn, and Zn. A powder linear resistance of the lithium manganese iron phosphate material is 5 mQ/mm-50 mQ/mm.

Furthermore, 0.85≤x≤0.95, 0.05≤y≤0.15, and M is at least one of V and Si.

Furthermore, a mass ratio of the carbon coating layer in the lithium manganese iron phosphate material is 0.6%-1.9%. Additionally or alternatively, a Dv50 particle size of the lithium manganese iron phosphate material is 0.2 µm-1.5 µm. Additionally or alternatively, a compaction density of the lithium manganese iron phosphate material is 2.5 g/m³-2.7 g/m³.

According to another aspect of the present disclosure, a method for preparing the above-mentioned lithium manganese iron phosphate material is provided. The preparation method includes following operations S1 and S2. In the operation S1, a first mixing is performed on raw materials including a manganese source, an iron source, a lithium source, and an acidic compound to obtain a slurry. In the operation S2, raw materials including the slurry and a carbon source are sequentially subjected to sand milling, spray granulation, and sintering to obtain a lithium manganese iron phosphate material. Specifically, the acidic compound is at least one selected from the group consisting of H₃VO₄, H₂SiO₃, H₂GeO₃, H₂SnO₃, and H₂ZnO₂.

Furthermore, the operation S1 further includes operations S11-S13. In the operation S11, a second mixing is performed on raw materials including the manganese source and the acidic compound to obtain a slurry A. In the operation S12, a third mixing is performed on raw materials including the iron source and the lithium source to obtain a slurry B. In the operation S13, the slurry A and the slurry B are mixed to obtain the slurry. A solid content of the slurry A is 20%-50%. A solid content of the slurry B is 30%-60%. Additionally or alternatively, a duration of the second mixing is 180 min-360 min. Additionally or alternatively, a duration of the third mixing is 60 min-180 min.

Furthermore, the manganese source is at least one selected from the group consisting of Mn₃O₄, MnCO₃, and MnSO₄. Additionally or alternatively, the iron source is nano-sized amorphous iron phosphate. Additionally or alternatively, the lithium source is at least one of lithium carbonate and lithium phosphate. Additionally or alternatively, based on a manganese element in the manganese source and a metal element and/or a silicon element in the acidic compound, a molar ratio of the manganese source to the acidic compound is 0.01-0.2:0.01-0.05. Additionally or alternatively, based on a lithium element in the lithium source and an iron element in the iron source, a molar ratio of the lithium source to the iron source is 1-1.02:0.8-1.

Furthermore, in the operation S2, a mixture is obtained by subjecting the raw materials including the slurry and the carbon source to the sand milling. A particle size of the mixture is 0.1 µm-1.2 µm, and a sand milling duration is 120 min-360 min. Additionally or alternatively, the carbon source is at least one of glucose and sucrose. Additionally or alternatively, a mass ratio of the slurry A, the slurry B, and the carbon source is 3-5:93-96:1-2. Additionally or alternatively, a sintering atmosphere is nitrogen. Additionally or alternatively, a sintering temperature is 720°C-780°C. Additionally or alternatively, a sintering duration is 24 h-36 h.

According to yet another aspect of the present disclosure, a cathode material is provided. The cathode material includes the above-mentioned lithium manganese iron phosphate material.

Furthermore, the cathode material further includes a lithium nickel cobalt manganese oxide material, and a mass ratio of the lithium manganese iron phosphate material to the lithium nickel cobalt manganese oxide material in the cathode material is 100:5-35.

According to yet another aspect of the present disclosure, a lithium-ion battery is provided. The lithium-ion battery includes a cathode sheet, an anode sheet, and a separator. The cathode sheet includes a cathode material, and the cathode material is the above-mentioned cathode material.

**By** applying the technical solution of the present disclosure, proportions of Fe, Mn, and a doping element M are optimized within the above specified ranges, enabling the lithium manganese iron phosphate material to exhibit lower impedance, thereby better meeting requirements for fast-charging performance. The doping element M, selected from the above specified types, can directionally optimize a lattice size of Mn, achieving higher capacity and lower impedance characteristics, thereby further improving energy density. The lithium manganese iron phosphate material of the present disclosure exhibits low powder linear resistance, meeting the demands for fast-charging performance, high energy density, and cycling performance. Additionally, the lithium manganese iron phosphate material of the present disclosure can be used alone or is suitable for blended applications. In blended applications, the lithium manganese iron phosphate material of the present disclosure can better match a charge-discharge platform of a ternary material, achieving fast-charging requirements over a wider SOC range while maintaining excellent energy density, capacity, fast-charging, and safety performance.

### BRIEF DESCRIPTION OF THE DRAWINGS

**The** accompanying drawings, which constitute part of the present disclosure, are provided to further illustrate the present disclosure. The illustrative embodiments and their descriptions are intended to explain the present disclosure and do not constitute any limitation to the present disclosure. In the drawings:

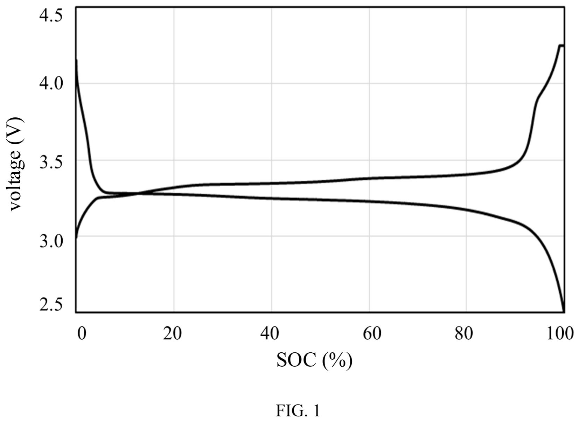

FIG. 1 is a charge-discharge curve of a lithium-ion battery prepared using a cathode material of Example 1 of the present disclosure.

### DETAILED DESCRIPTION

**It** should be noted that, in the absence of conflict, the embodiments and features of the embodiments in the present disclosure may be combined with each other. The present disclosure will be described in detail below with reference to the accompanying drawings and embodiments.

As analyzed in the background art of the present disclosure, the lithiated phosphate materials in the related art struggle to balance high energy density and fast-charging performance and fail to meet the requirements for blended applications. To solve these problems, the present disclosure provides a lithium manganese iron phosphate material and a preparation method of the lithium manganese iron phosphate material, a cathode material, and a lithium-ion battery.

In some embodiments of the present disclosure, a lithium manganese iron phosphate material is provided. The lithium manganese iron phosphate material includes a lithium manganese iron phosphate core and a carbon coating layer covering a surface of the lithium manganese iron phosphate core. A chemical formula of the lithium manganese iron phosphate core is LiFeₓMn_{y}M_{1-x-y}PO₄. In detail, 0.80≤x<1, 0<y≤0.20, and x+y<1. M is at least one selected from the group consisting of V, Si, Ge, Sn, and Zn. A powder linear resistance of the lithium manganese iron phosphate material is 5 mΩ/mm-50 mQ/mm.

In the present disclosure, proportions of Fe, Mn, and a doping element M are optimized within the above specified ranges, enabling the lithium manganese iron phosphate material to exhibit lower impedance, thereby better meeting requirements for fast-charging performance. The doping element M, selected from the above specified types, can directionally optimize a lattice size of Mn, achieving higher capacity and lower impedance characteristics, thereby further improving energy density. The lithium manganese iron phosphate material of the present disclosure exhibits low powder linear resistance, meeting the demands for fast-charging performance, high energy density, and cycling performance. Additionally, the lithium manganese iron phosphate material of the present disclosure can be used alone or is suitable for blended applications. In blended applications, the lithium manganese iron phosphate material of the present disclosure can better match a charge-discharge platform of a ternary material, achieving fast-charging requirements over a wider SOC range while maintaining excellent energy density, capacity, fast-charging, and safety performance.

To further improve the fast-charging performance and energy density of the lithium manganese iron phosphate material, in some embodiments of the present disclosure, 0.85≤x≤0.95, 0.05≤y≤0.15, and M is at least one of V and Si.

**In** some embodiments of the present disclosure, a mass ratio of the carbon coating layer in the lithium manganese iron phosphate material is 0.6%-1.9%. Additionally or alternatively, a Dv50 particle size of the lithium manganese iron phosphate material is 0.2 µm-1.5 µm. Additionally or alternatively, a compaction density of the lithium manganese iron phosphate material is 2.5 g/m³-2.7 g/m³.

Controlling the mass ratio of the carbon coating layer within the above range helps improve structural stability of the lithium manganese iron phosphate material, thereby enhancing high-rate performance of the lithium-ion battery and making the lithium-ion battery more suitable for fast-charge and discharge scenarios. Controlling the Dv50 particle size and the compaction density of the lithium manganese iron phosphate material within the above ranges helps improve charge-discharge efficiency and cycling stability of the lithium-ion battery. Here, the Dv50 particle size refers to a particle size value corresponding to a cumulative volume percentage of 50% in particle size distribution of granular substances.

**In** some embodiments of the present disclosure, a preparation method of the above lithium manganese iron phosphate material is provided. The preparation method includes the following operations S1-S2. In the operation S1, a first mixing is performed on raw materials including a manganese source, an iron source, a lithium source, and an acidic compound to obtain a slurry. In the operation S2, raw materials including the slurry and a carbon source are sequentially subjected to sand milling, spray granulation, and sintering to obtain the lithium manganese iron phosphate material. Specifically, the acidic compound is at least one selected from the group consisting of H₃VO₄, H₂SiO₃, H₂GeO₃, H₂SnO₃, and H₂ZnO₂.

**By** adding the above acidic compound for doping in the operation S1, since the acidic compound has more active hydrogen bonds, the acidic compound easily reacts with the manganese source to form metal-oxygen bonds. On one hand, the first mixing can combine the doping element with the manganese element, and the doping element can stabilize the manganese element, thereby reducing an impact of the manganese element on the impedance of the lithium manganese iron phosphate material and further improving the fast-charging performance of the lithium manganese iron phosphate material. In addition, the doping element can optimize a lattice size of lithium manganese iron phosphate, achieving higher capacity and lower impedance characteristics, thereby improving the energy density of the lithium manganese iron phosphate material. Therefore, the lithium manganese iron phosphate material obtained by the above preparation method can not only balance the fast-charging performance and the high energy density but is also suitable for blended applications.

**In** some embodiments of the present disclosure, the operation S1 further includes operations S11-S13. In the operation S11, a second mixing is performed on raw materials including the manganese source and the acidic compound to obtain a slurry A. In the operation S12, a third mixing is performed on raw materials including the iron source and the lithium source to obtain a slurry B. In the operation S13, the slurry A and the slurry B are mixed to obtain the slurry. A solid content of the slurry A is 20%-50%. A solid content of the slurry B is 30%-60%. Additionally or alternatively, a duration of the second mixing is 180 min-360 min. Additionally or alternatively, a duration of the third mixing is 60 min-180 min.

**By** separately mixing the manganese source and the acidic compound in the operation S11 and controlling the duration of the second mixing within the above range, part of the doping metal element preferentially combines with the manganese element, thereby directionally optimizing high-impedance and high-polarization characteristics of the manganese element and further improving the fast-charging and power characteristics of the lithium manganese iron phosphate material. Adopting the above step-by-step mixing method and controlling the duration of the third mixing, the solid content of the slurry A and the solid content of the slurry B within the above ranges help ensure full reaction among the components, thereby improving activity and stability of the lithium manganese iron phosphate material. Particularly performing the second mixing and the third mixing in a coarse grinding tank through low-cost ball milling can achieve better combination of the doping element and the manganese element, thereby preparing a doping mixture with more uniform doping and higher strength.

In some embodiments of the present disclosure, the manganese source is at least one selected from the group consisting of Mn₃O₄, MnCO₃, and MnSO₄. Additionally or alternatively, the iron source is nano-sized amorphous iron phosphate. Additionally or alternatively, the lithium source is at least one of lithium carbonate and lithium phosphate. Additionally or alternatively, based on a manganese element in the manganese source and a metal element and/or a silicon element in the acidic compound, a molar ratio of the manganese source to the acidic compound is 0.01-0.2:0.01-0.05. Additionally or alternatively, based on a lithium element in the lithium source and an iron element in the iron source, a molar ratio of the lithium source to the iron source is 1-1.02:0.8-1.

Controlling types of the manganese source, the acidic compound, the iron source, and the lithium source, as well as the molar ratio of the manganese source to the acidic compound and the molar ratio of the lithium source to the iron source within the above ranges, helps effectively adjust chemical composition of the lithium manganese iron phosphate material, thereby optimizing electrochemical performance and lower impedance of the lithium manganese iron phosphate material, and better meeting the requirements for fast-charging performance.

**In** one embodiment of the present disclosure, in the operation S2, a mixture is obtained by subjecting the raw materials including the slurry and the carbon source to the sand milling. A particle size of the mixture is 0.1 µm-1.2 µm, and a sand milling duration is 120 min-360 min. Additionally or alternatively, the carbon source is at least one of glucose and sucrose. Additionally or alternatively, a mass ratio of the slurry A, the slurry B, and the carbon source is 3-5:93-96:1-2. Additionally or alternatively, a sintering atmosphere is nitrogen. Additionally or alternatively, a sintering temperature is 720°C-780°C. Additionally or alternatively, a sintering duration is 24 h-36 h.

Controlling the sand milling duration and type of carbon source within the above ranges helps form a uniform carbon coating layer during the sand milling process, thereby improving the conductivity of the lithium manganese iron phosphate material. Controlling the mass ratio of the slurry A, the slurry B, and the carbon source within the above range helps precisely adjust proportions of Fe, Mn, and M elements and a mass of the carbon coating layer, thereby enabling the lithium manganese iron phosphate material to achieve optimal electrochemical performance. Controlling the sintering atmosphere, the sintering temperature, and the sintering duration within the above ranges helps optimize a crystal structure of the lithium manganese iron phosphate material, thereby improving conductivity and reducing impedance, and further enhancing the fast-charging performance and energy density of the lithium manganese iron phosphate material.

**In** some embodiments of the present disclosure, a cathode material is provided. The cathode material includes the above lithium manganese iron phosphate material.

The cathode material including the above lithium manganese iron phosphate material can better match a charge-discharge platform of a ternary material, achieving fast-charging requirements over a wider SOC range.

**In** some embodiments of the present disclosure, the cathode material further includes a lithium nickel cobalt manganese oxide material, and a mass ratio of the lithium manganese iron phosphate material to the lithium nickel cobalt manganese oxide material in the cathode material is 100:5-35.

**In** blended applications, the lithium manganese iron phosphate material of the present disclosure is mixed with the lithium nickel cobalt manganese oxide material as the cathode material, and controlling the mass ratio of the lithium manganese iron phosphate material to the lithium nickel cobalt manganese oxide material within the above range helps further improve the fast-charging performance and energy density of the lithium-ion battery, making the lithium-ion battery more suitable for the charge-discharge platform.

In some embodiments of the present disclosure, a lithium-ion battery is provided. The lithium-ion battery includes a cathode sheet, an anode sheet, and a separator. The cathode sheet includes a cathode material. The cathode material is the above cathode material.

The lithium-ion battery including the above cathode material exhibits high energy density, excellent fast-charging performance, and cycling performance.

The beneficial effects of the present disclosure will be further illustrated below in conjunction with embodiments.

### Example 1

Based on a manganese element in a manganese source and a metal element in an acidic compound, Mn₃O₄ and H₃VO₄ were mixed at a molar ratio of 0.15:0.05 in a coarse grinding tank A for a second mixing for 240 min to obtain a slurry A, with a solid content of 35%. Simultaneously, based on a lithium element in a lithium source and an iron element in an iron source, lithium carbonate and nano-sized amorphous iron phosphate were mixed at a molar ratio of 1:0.8 in a coarse grinding tank B for a third mixing for 80 min to obtain a slurry B, with a solid content of 45%. The slurry A and slurry B were mixed to obtain a slurry, and glucose was added to the slurry for sand milling in a sand milling tank for 240 min. A mass ratio of the slurry A, slurry B, and glucose was 5:94:1. After the mixture of the slurry and glucose was ground to a target particle size of 0.5 µm, spray granulation and sintering at 750°C in a nitrogen atmosphere for 30 h were performed sequentially, followed by crushing into particles with a Dv50 particle size of 1 µm. The particles were compacted under 3T pressure to obtain a lithium manganese iron phosphate material LiFe_{0.8}Mn_{0.15}V_{0.05}PO₄. A mass percentage of the carbon coating layer in the lithium manganese iron phosphate material was 1.6%.

The lithium manganese iron phosphate material was mixed with a lithium nickel cobalt manganese oxide material LiNi_{0.8}Co_{0.1}Mn_{0.1}O₂ at a mass ratio of 0.85:0.15 to obtain the cathode material.

### Example 2

Based on a manganese element in a manganese source and a Si element in an acidic compound, MnCO₃ and H₂SiO₃ were mixed at a molar ratio of 0.15:0.03 in a coarse grinding tank A for a second mixing for 210 min to obtain a slurry A, with a solid content of 20%. Simultaneously, based on a lithium element in a lithium source and an iron element in an iron source, lithium carbonate and nano-sized amorphous iron phosphate were mixed at a molar ratio of 1:0.82 in a coarse grinding tank B for a third mixing for 90 min to obtain a slurry B, with a solid content of 30%. The slurry A and slurry B were mixed to obtain a slurry, and glucose was added to the slurry for sand milling in a sand milling tank for 240 min. A mass ratio of the slurry A, slurry B, and glucose was 5:94:1. After the mixture of the slurry and glucose was ground to a target particle size of 0.1 µm, spray granulation and sintering at 720°C in a nitrogen atmosphere for 36 h were performed sequentially, followed by crushing into particles with a Dv50 particle size of 0.2 µm. The particles were compacted under 3T pressure to obtain a lithium manganese iron phosphate material LiFe_{0.82}Mn_{0.15}Si_{0.03}PO₄. A mass percentage of the carbon coating layer in the lithium manganese iron phosphate material was 1.6%.

The lithium manganese iron phosphate material was mixed with a lithium nickel cobalt manganese oxide material LiNi_{0.8}Co_{0.1}Mn_{0.1}O₂ at a mass ratio of 0.85:0.15 to obtain the cathode material.

### Example 3

Based on a manganese element in a manganese source and a Si element in an acidic compound, MnCO₃ and H₂SiO₃ were mixed at a molar ratio of 0.07:0.03 in a coarse grinding tank A for a second mixing for 180 min to obtain a slurry A, with a solid content of 50%. Simultaneously, based on a lithium element in a lithium source and an iron element in an iron source, lithium carbonate and nano-sized amorphous iron phosphate were mixed at a molar ratio of 1:0.9 in a coarse grinding tank B for a third mixing for 120 min to obtain a slurry B, with a solid content of 60%. The slurry A and slurry B were mixed to obtain a slurry, and sucrose was added to the slurry for sand milling in a sand milling tank for 240 min. A mass ratio of the slurry A, slurry B, and glucose was 3:96:1. After the mixture of the slurry and glucose was ground to a target particle size of 1.2 µm, spray granulation and sintering at 780°C in a nitrogen atmosphere for 24 h were performed sequentially, followed by crushing into particles with a Dv50 particle size of 1.5 µm. The particles were compacted under 3T pressure to obtain a lithium manganese iron phosphate material LiFe_{0.9}Mn_{0.07}Si_{0.03}PO₄. A mass percentage of the carbon coating layer in the lithium manganese iron phosphate material was 1.6%.

The lithium manganese iron phosphate material was mixed with a lithium nickel cobalt manganese oxide material LiNi_{0.8}Co_{0.1}Mn_{0.1}O₂ at a mass ratio of 0.85:0.15 to obtain the cathode material.

### Example 4

The difference from Example 1 lies in that the mass ratio of the slurry A, slurry B, and glucose was 5:94:1.5, ultimately obtaining a lithium manganese iron phosphate material and a cathode material, and the mass percentage of the carbon coating layer in the lithium manganese iron phosphate material was 1.9%.

### Example 5

The difference from Example 1 lies in that the mass ratio of the slurry A, slurry B, and glucose was 5:94:3, ultimately obtaining a lithium manganese iron phosphate material and a cathode material, and the mass percentage of the carbon coating layer in the lithium manganese iron phosphate material was 2.5%.

### Example 6

The difference from Example 1 lies in that the solid content of the slurry A was 50%, and the solid content of the slurry B was 60%, ultimately obtaining a lithium manganese iron phosphate material and a cathode material.

### Example 7

The difference from Example 1 lies in that the solid content of the slurry A was 55%, and the solid content of the slurry B was 65%, ultimately obtaining a lithium manganese iron phosphate material and a cathode material.

### Example 8

The difference from Example 1 lies in that the sintering temperature was 780°C, and the sintering duration was 24 h, ultimately obtaining a lithium manganese iron phosphate material and a cathode material.

### Example 9

The difference from Example 1 lies in that the sintering temperature was 800°C, and the sintering duration was 20 h, ultimately obtaining a lithium manganese iron phosphate material and a cathode material.

### Example 10

The difference from Example 1 lies in that the lithium manganese iron phosphate material was directly used as the cathode material.

### Example 11

The difference from Example 1 lies in that, based on the manganese element in the manganese source, the metal element in the acidic compound, the lithium element in the lithium source, and the iron element in the iron source, Mn₃O₄, H₃VO₄, lithium phosphate, and nano-sized amorphous iron phosphate were mixed at a molar ratio of 0.15:0.05:1:0.8 in a coarse grinding tank for a first mixing for 320 min to obtain the slurry, ultimately obtaining a lithium manganese iron phosphate material LiFe_{0.8}Mn_{0.15}V_{0.05}PO₄ and a cathode material.

### Comparative Example 1

Based on a lithium element in a lithium source, an iron element in an iron source, and a manganese element in a manganese source, lithium carbonate, nano-sized amorphous iron phosphate, and MnCO₃ were mixed at a molar ratio of 1:0.5:0.5 in a coarse grinding tank for mixing for 240 min to obtain a slurry. The slurry and glucose were subjected to sand milling for 240 min, with a mass ratio of 99:1. After the mixture of the slurry and glucose was ground to a target particle size of 0.5 µm, spray granulation and sintering at 750°C in a nitrogen atmosphere for 30 h were performed sequentially, followed by crushing into particles with a Dv50 particle size of 1 µm. The particles were compacted under 3T pressure to obtain a lithium manganese iron phosphate material LiFe_{0.5}Mn_{0.5}PO₄.

The lithium manganese iron phosphate material was mixed with a lithium nickel cobalt manganese oxide material LiNi_{0.8}Co_{0.1}Mn_{0.1}O₂ at a mass ratio of 0.85:0.15 to obtain the cathode material.

### Comparative Example 2

Based on a lithium element in a lithium source and an iron element in an iron source, lithium phosphate and nano-sized amorphous iron phosphate were mixed at a molar ratio of 1:1 in a coarse grinding tank for mixing for 120 min to obtain a slurry. The slurry and glucose were subjected to sand milling for 240 min, with a mass ratio of 98:2. After the mixture of the slurry and glucose was ground to a target particle size of 0.5 µm, spray granulation and sintering at 750°C in a nitrogen atmosphere for 30 h were performed sequentially, followed by crushing into particles with a Dv50 particle size of 1 µm. The particles were compacted under 3T pressure to obtain a lithium iron phosphate material LiFePO₄.

The lithium manganese iron phosphate material was mixed with a lithium nickel cobalt manganese oxide material LiNi_{0.8}Co_{0.1}Mn_{0.1}O₂ at a mass ratio of 0.85:0.15 to obtain the cathode material.

### Comparative Example 3

The difference from Example 1 lies in that Mn₃O₄ and metal oxide V₂O₅ were subjected to the second mixing to obtain the slurry A, ultimately obtaining a lithium manganese iron phosphate material LiFe_{0.8}Mn_{0.15}V_{0.05}PO₄.

The lithium manganese iron phosphate material was mixed with a lithium nickel cobalt manganese oxide material LiNi_{0.8}Co_{0.1}Mn_{0.1}O₂ at a mass ratio of 0.85:0.15 to obtain the cathode material.

### Testing Methods:

Cathode Sheet: The cathode materials from the above examples and comparative examples, binder PVDF, and conductive agent acetylene black were mixed at a mass ratio of 94:3:3, and NMP was added to form a cathode slurry. A viscosity of the cathode slurry was 6000 mPa·s, and a solid content of the cathode slurry was 50%. The cathode slurry was coated on an aluminum foil current collector and rolled to obtain a cathode sheet with a coating surface density of 200 g/m² and a compaction density of 2.7 g/m³.

Anode Sheet: An anode material graphite, conductive agent acetylene black, binder sodium carboxymethyl cellulose (CMC), and styrene-butadiene rubber (SBR) were mixed at a mass ratio of 94:1:2:3, followed by adding solvent deionized water and stirring uniformly to obtain an anode slurry. The anode slurry was uniformly coated on both surfaces of an anode current collector copper foil, followed by drying, rolling, and slicing to obtain an anode sheet with a coating surface density of 90 g/cm³ and a compaction density of 1.6 g/cm³.

Electrolyte: Ethylene carbonate (EC), ethyl methyl carbonate (EMC), and diethyl carbonate (DEC) were mixed at a volume ratio of 1:1:1 to obtain an organic solvent. Then, thoroughly dried lithium salt LiPF₆ was dissolved in the organic solvent to prepare an electrolyte with a molar concentration of 1 mol/L.

Cell Assembly: The cathode sheet, separator, and anode sheet were stacked sequentially, followed by welding tabs and baking. After passing a moisture test, an appropriate amount of electrolyte was injected. After encapsulation, aging, formation, and degassing sealing, a lithium-ion battery was prepared.

### Electrical Performance Testing:

Cycle Testing: DCR Testing: The lithium-ion battery was discharged to 50% capacity at room temperature, followed by 2C discharge for 10s (C is a rated battery capacity). A voltage V1 at the end of a resting period before discharge and a voltage V2 at the end of discharge were recorded. A DCR value was calculated as (V1-V2)/2C. The lithium-ion battery was placed in a 45°C constant temperature chamber, charged to 4.25V at 1C constant current and constant voltage with a cutoff current of 0.02C, followed by 1C discharge cycles. A cycle capacity and average voltage were recorded, and the number of cycles at 80% capacity retention was obtained, along with a voltage drop.

Powder Linear Resistance Testing: Using an ST2742b fully automatic powder resistance tester, according to GB/T 40007-2021, a four-probe method was used for testing. After placing 1.5 g of lithium manganese iron phosphate material powder into a mold and applying 1T pressure, a thickness, current, and voltage of the powder compact were recorded, and a resistance per unit length was tested, which is the powder linear resistance.

Compaction Density Testing: Using a punching module, a unit area of the electrode sheet was punched. A mass of the electrode sheet was weighed. A mass of a unit area of the aluminum foil was subtracted to obtain a mass of the cathode material. A thickness of the cathode material was measured, and a volume of the cathode material was calculated. A compaction density of the cathode material=mass of the cathode material/volume of the cathode material.

**The** above test results are shown in Table 1.

**Table 1**

| example/comp arative example | powder linear resistance (mΩ/mm) | DCR (mΩ) | cycle number (cls) | voltage drop (mV) |
|---|---|---|---|---|
| Ex. 1 | 37 | 40 | 4000 | 30 |
| Ex. 2 | 26 | 37 | 5000 | 10 |
| Ex. 3 | 18 | 32 | 6200 | 10 |
| Ex. 4 | 15 | 42 | 3800 | 40 |
| Ex. 5 | 13 | 47 | 3000 | 50 |
| Ex. 6 | 40 | 55 | 3000 | 40 |
| Ex. 7 | 50 | 65 | 2600 | 70 |
| Ex. 8 | 42 | 58 | 4200 | 20 |
| Ex. 9 | 50 | 67 | 3700 | 15 |
| Ex. 10 | 37 | 46 | 5500 | 5 |
| Ex. 11 | 50 | 63 | 3200 | 55 |
| Comp. Ex. 1 | 68 | 72 | 2400 | 95 |
| Comp. Ex. 2 | 20 | 30 | 2000 | 180 |
| Comp. Ex. 3 | 66 | 70 | 2500 | 90 |

FIG. 1 shows a charge-discharge curve of the lithium-ion battery prepared using the cathode material of Example 1. From FIG. 1, it can be seen that the lithium manganese iron phosphate material of the present disclosure has a wider charge-discharge range, with no abrupt changes in the 10%-80% SOC range, which is more conducive to fast charging between 10% and 80%.

From the above description, it can be seen that the embodiments of the present disclosure achieve the following technical effects.

**In** the present disclosure, proportions of Fe, Mn, and a doping element M are optimized within the above specified ranges, enabling the lithium manganese iron phosphate material to exhibit lower impedance, thereby better meeting requirements for fast-charging performance. The doping element M, selected from the above specified types, can directionally optimize a lattice size of Mn, achieving higher capacity and lower impedance characteristics, thereby further improving energy density. The lithium manganese iron phosphate material of the present disclosure exhibits low powder linear resistance, meeting the demands for fast-charging performance, high energy density, and cycling performance. Additionally, the lithium manganese iron phosphate material of the present disclosure can be used alone or is suitable for blended applications. In blended applications, the lithium manganese iron phosphate material of the present disclosure can better match a charge-discharge platform of the ternary material, achieving fast-charging requirements over a wider SOC range while maintaining excellent energy density, capacity, fast-charging, and safety performance.

The above are only embodiments of the present disclosure and are not intended to limit the present disclosure. For those skilled in the art, various modifications and changes can be made to the present disclosure. Any modifications, equivalent substitutions, or improvements made within the spirit and principles of the present disclosure shall be included within the scope of protection of the present disclosure.

## Claims

1. A lithium manganese iron phosphate material, **characterized by** comprising a lithium manganese iron phosphate core and a carbon coating layer covering a surface of the lithium manganese iron phosphate core;
a chemical formula of the lithium manganese iron phosphate core is LiFeₓMn_{y}M_{1-x-y} PO₄, wherein 0.80≤x<1, 0<y≤0.20, and x+y<1; M is at least one selected from the group consisting of V, Si, Ge, Sn, and Zn; a powder linear resistance of the lithium manganese iron phosphate material is 5 mΩ/mm-50 mQ/mm.

2. The lithium manganese iron phosphate material according to claim 1, wherein 0.85≤x≤0.95, 0.05≤y≤0.15, and M is at least one of V and Si.

3. The lithium manganese iron phosphate material according to claim 1 or 2, wherein a mass ratio of the carbon coating layer in the lithium manganese iron phosphate material is 0.6%-1.9%.

4. The lithium manganese iron phosphate material according to any one of claims 1-3, wherein a Dv50 particle size of the lithium manganese iron phosphate material is 0.2 µm-1.5 µm; and/or,
a compaction density of the lithium manganese iron phosphate material is 2.5 g/m³-2.7 g/m³.

5. A preparation method of the lithium manganese iron phosphate material according to any one of claims 1 to 4, **characterized by** comprising:
S1: performing a first mixing on raw materials comprising a manganese source, an iron source, a lithium source, and an acidic compound to obtain a slurry; and
S2: sequentially subjecting raw materials comprising the slurry and a carbon source to sand milling, spray granulation, and sintering to obtain the lithium manganese iron phosphate material;
wherein the acidic compound is at least one selected from the group consisting of H₃ VO₄, H₂SiO₃, H₂GeO₃, H₂SnO₃, and H₂ZnO₂.

6. The preparation method according to claim 5, wherein S1 further comprises:
S11: performing a second mixing on raw materials comprising the manganese source and the acidic compound to obtain a slurry A;
S12: performing a third mixing on raw materials comprising the iron source and the lithium source to obtain a slurry B; and
S13: mixing raw materials comprising the slurry A and the slurry B to obtain the slurry;
wherein a solid content of the slurry A is 20%-50%; a solid content of the slurry B is 30%-60%.

7. The preparation method according to claim 6, wherein a duration of the second mixing is 180 min-360 min, and/or, a duration of the third mixing is 60 min-180 min.

8. The preparation method according to any one of claims 5-7, wherein the manganese source is at least one selected from the group consisting of Mn₃O₄, MnCO₃, and MnSO₄the iron source is nano-sized amorphous iron phosphate; and/or, the lithium source is at least one of lithium carbonate and lithium phosphate.

9. The preparation method according to any one of claims 5-8, wherein based on a manganese element in the manganese source and a metal element and/or Si element in the acidic compound, a molar ratio of the manganese source to the acidic compound is 0.01-0.2:0.01-0.05; and/or,
based on a lithium element in the lithium source and an iron element in the iron source, a molar ratio of the lithium source to the iron source is 1-1.02:0.8-1.

10. The preparation method according to any one of claims 5-9, wherein in S2, the raw materials comprising the slurry and the carbon source are subjected to the sand milling to obtain a mixture; a particle size of the mixture is 0.1 µm-1.2 µm, and a sand milling duration is 120 min-360 min.

11. The preparation method according to any one of claims 6-10, wherein the carbon source is at least one of glucose and sucrose; and/or, a mass ratio of the slurry A, the slurry B, and the carbon source is 3-5:93-96:1-2.

12. The preparation method according to any one of claims 5-11, wherein a sintering atmosphere is nitrogen, a sintering temperature is 720°C-780°C, and a sintering duration is 24 h-36 h.

13. A cathode material, **characterized by** comprising a lithium manganese iron phosphate material according to any one of claims 1-4.

14. The cathode material according to claim 13, further comprising a lithium nickel cobalt manganese oxide material, wherein a mass ratio of the lithium manganese iron phosphate material to the lithium nickel cobalt manganese oxide material in the cathode material is 100:5-35.

15. A lithium-ion battery, **characterized by** comprising a cathode sheet, an anode sheet, and a separator, wherein the cathode sheet comprises a cathode material, and the cathode material is the cathode material according to any one of claims 13-14.
